Europäisches Patentamt

European Patent Office

Office européen des brevets

(19)

(11) **EP 0 720 730 B1**

(12) **EUROPÄISCHE PATENTSCHRIFT**

(45) Veröffentlichungstag und Bekanntmachung des Hinweises auf die Patenterteilung:
**30.09.1998 Patentblatt 1998/40**

(21) Anmeldenummer: **94927521.8**

(22) Anmeldetag: **31.08.1994**

(51) Int Cl.⁶: **G01J 3/10**, F21V 7/14

(86) Internationale Anmeldenummer:
**PCT/EP94/02885**

(87) Internationale Veröffentlichungsnummer:
**WO 95/08755 (30.03.1995 Gazette 1995/14)**

(54) **STRAHLUNGSANORDNUNG MIT REFLEKTORKÖRPER UND DEREN VERWENDUNG**

RADIATION ARRANGEMENT WITH REFLECTOR BODY AND ITS USE

SYSTEME RADIANT POURVU D'UN CORPS REFLECTEUR, ET SON UTILISATION

(84) Benannte Vertragsstaaten:
**CH DE FR GB IT LI NL**

(30) Priorität: **23.09.1993 DE 4332244**

(43) Veröffentlichungstag der Anmeldung:
**10.07.1996 Patentblatt 1996/28**

(73) Patentinhaber: **Heraeus Noblelight GmbH**
**63450 Hanau (DE)**

(72) Erfinder:
• **GATZMANGA, Heinz**
**D-06366 Köthen (DE)**
• **BAECKE, Martin**
**D-06847 Dessau (DE)**

(74) Vertreter: **Kühn, Hans-Christian**
**Heraeus Noblelight GmbH,**
**Postfach 11 46**
**63797 Kleinostheim (DE)**

(56) Entgegenhaltungen:
**EP-A- 0 177 724          EP-A- 0 332 749**
**DE-A- 1 773 336          DE-A- 1 936 245**
**DE-A- 3 731 686          DE-A- 3 936 374**
**US-A- 2 741 691**

• **JOURNAL OF PHYSICS E. SCIENTIFIC INSTRUMENTS, Bd.17, Nr.12, Dezember 1984, BRISTOL GB Seite 1107 LE DOUCEN ET AL. 'CARBON FURNACE INFRARED SOURCE'**

## Beschreibung

Die Erfindung betrifft eine Strahlungsanordnung mit einer Strahlenquelle, insbesondere Infrarotstrahler, mit wenigstens einem Reflektor, welcher einen wesentlichen Teil der abgegebenen Strahlung als Strahlenbündel in eine vorgegebene Strahlenaustritts-Richtung ablenkt und der wenigstens teilweise durch einen Körper mit reflektierender Oberfläche gebildet ist, dessen Umfang sich in Richtung des Strahlenaustritts verringert und die Verwendung einer solchen Strahlungsanordnung.

Die US-A-2 741 691 beschreibt eine Infrarot-Strahlungsanordnung mit einer Strahlungsquelle, die beispielsweise als Torusoberfläche ausgebildet ist. Ein wesentlicher Teil der von der Strahlungsquelle abgegebenen Strahlung wird durch einen Reflektor als Strahlenbündel in eine vorgegebene Richtung abgelenkt. Der Reflektor ist beispielsweise durch einen kegelförmigen Körper gebildet, dessen Umfang sich in Richtung des Strahlenaustritts verringert, und ist so angeordnet, daß seine reflektierende Mantelfläche - gegen die Strahlungsaustrittsrichtung gesehen - von der Strahlungsquelle umgeben ist.

Als problematisch erweist es sich, daß die von der Strahlungsquelle ausgehende Konzentration der Strahlungsintensität nur mittels verhältnismäßig aufwendiger Strahlungsführung mit Hilfe konkaver bzw. konvexer Spiegel möglich ist.

Weiterhin ist aus der DE-A-3936374 ein Kraftfahrzeugscheinwerfer bekannt, der eine nur geringe Wärme abgebende Lichtquelle aufweist, wobei ein im Bereich der Abdeckscheibe angeordneter Filter mit einem Durchlaßverhalten für sichtbares Licht und einem Absorptionsverhalten für nicht sichtbare Strahlung vorgesehen ist. Als problematisch erweist es sich bei dieser Anordnung, daß die Intensitätsdichte des ausstehenden Strahlungsbündels aufgrund seines gegenüber der Oberfläche der Lichtquelle offensichtlich vergrößerten Querschnitts verhältnismäßig gering ist.

Aus der EP-A-0 332 749 ist ebenfalls eine Infrarot-Strahlungsquelle bekannt, deren Strahlungskörper als Wendel ausgebildet ist, wobei die Leuchtdichte aufgrund des verhältnismäßig großen Strahlungsquerschnitts der austretenden Strahlung im Strahlengang verringert wird.

Aus der DE-A-3 731 686 ist ein Verfahren und eine Vorrichtung zur Herstellung einer korrosionsfesten Schicht mit hohem Reflexionsverhalten auf der Oberfläche von Werkstücken, insbesondere von aus Kunststoff gebildeten Reflektoreinsätzen in einer Vakuumkammer mit einer Glimmkathode und einem Verdampfer bekannt; dabei wird nach Aufbringen einer ersten Schicht ein Arbeitsvakuum hergestellt, wobei die Heizwendel soweit erhitzt werden, daß eingeschobene Aluminiumstäbe schmelzen, wobei sich das flüssige Aluminium zunächst auf der Wendel verteilt; bei weiterer Aufheizung kondensiert sich das Aluminium auf den als Formteile bezeichneten Reflektor-Flächen; Möglichkeiten zur Konzentration der von der Wendel ausgehenden Leuchtdichte sind jedoch nicht angegeben.

Weiterhin beschreibt die EP-A-0 177 724 eine Strahlungsquelle für Infrarotstrahler, wobei die Strahlungsquelle aus einem Flächenstrahler und einer Widerstandsschicht besteht, die auf einem Trägersubstrat angeordnet sind. Eine Erhöhung der Leuchtdichte im austretenden Strahlengang, wie sie für eine Hochleistungsstrahlung erwünscht wäre, ist nicht angegeben.

Aus der DE-A-1 936 245 ist eine Infrarotstrahleranordnung mit konstanter Strahlungsleistung für Infrarot-Analysatoren bekannt; eine Erhöhung der Leuchtdichte ist dabei nicht vorgesehen. Weiterhin ist es aus dem JOURNAL OF PHYSICS E. SCIENTIFIC INSTRUMENTS, Band 17. No. 12, Dezember 1984, BRISTOL GB, Seite 1107: LE DOUCEN ET AL. "CARBON FURNACE INFRARED SOURCE" bekannt, Infrarotstrahler für Kohlenstoff-Öfen mit Heizstäben aus Kohlenstoff aufzubauen, mit denen verhältnismäßig hohe Temperaturen im Bereich bis zu 3300 K erzielt werden können; eine divergierende Infrarotstrahlung tritt aus einem Kalziumfluoridfenster aus; eine Konzentration der Leuchtdichte der Infrarot-Strahlung ist dabei nicht vorgesehen.

Aus der DE AS 17 73 336 ist ein Infrarotstrahler zur Verwendung in einem Infrarot-Analysengerät bekannt, bei dem auf eine hochtemperaturbeständige, elektrisch nicht leitende Unterlage, insbesondere ein Tonerdeplättchen eine Schicht aus Widerstandsmaterial aufgeschmolzen ist, die aus einem verfestigten Binder und einem feinverteiltem elektrisch leitendem Material besteht, das in diesem Binder in elektrisch leitendem Verhältnis dispergiert ist; der Binder besteht vorzugsweise aus einer Keramikmasse, während das elektrisch leitende Material ein Edelmetall ist. Die elektrischen Anschlüsse sind an sich gegenüberliegenden Enden der Widerstandsschicht vorgesehen. Als problematisch erweist sich bei einer solchen Anordnung die Bildung eines gezielten Strahlenganges der austretenden Strahlung, da hier auf irgendwelche Bündelungsmittel verzichtet wird.

Weiterhin beschreibt die WO 92/05411 eine Infrarot-Strahlenquelle in Form eines durch Spannelemente gestrafften elektrisch leitenden Bandes, welches von Strom durchflossen wird. Außer der frontal in Richtung der Flächennormalen austretenden Strahlung wird zusätzlich die nach rückwärts gerichtete Strahlung über ein Reflektorsystem zurückgespiegelt, das ebenfalls in frontseitiger Richtung austritt.

Als problematisch ist bei solchen Flächenstrahlern die fehlende Möglichkeit zur Bündelung der frontseitig austretenden Strahlern anzusehen, da diese nicht nur in Richtung der Flächennormalen, sondern in sämtliche Richtungen oberhalb der Strahlenaustrittsebene austritt. Bei derartigen Flächenstrahlern tritt daher eine hohe Verlustleistung auf.

Weiterhin ist eine Strahlungsanordnung zur gerichteten Abgabe von Infrarot-Strahlung mittels Reflektoreinheit aus dem DE-GM 87 00 427 bekannt. Die darin beschriebene Infrarotstrahler-Einheit besteht aus mehreren in Schutzgehäuse aufgenommene Infrarot-Strahlen, die einen glühlampenähnlichen Aufbau besitzen, wobei auf der Innenseite des Glaskolbens eine aufgedampfte Reflektorschicht vorgesehen ist.

Weiterhin beschreibt die US-PS 3,263,061 eine elektrische Wärmevorrichtung für Portalanlagen, in der ein aus einer Nickel-Chrom-Wendel bestehendes Heizelement in einem Gehäuse mit einem Parabolreflektor angeordnet ist, welcher mit einem hochreflektierenden Material wie beispielsweise Aluminium versehen ist und die von der Heizwendel ausgehende Wärmestrahlung gebündelt nach außen strahlt.

Als problematisch erweist sich bei solchen konventionellen thermischen Strahlern, daß die strahlende Fläche deutlich kleiner ist als der Strahlenquerschnitt des austretenden Lichtbündels; die Intensität gerichteter Strahlung wird daher im Strahl verringert. Weiterhin erweist es sich als problematisch, daß die eingebrachte Leistung über das Gehäuse an die Umgebung abzugeben ist, wobei aufgrund der eher punkfförmigen Strahlenquelle schwer beherrschbare Temperaturgradienten in der Strahlungsanordnung, d. h. im Gesamtgerät auftreten können. Weiterhin besteht bei herkömmlichen Strahlungsanordnungen mit offener Wendel die Gefahr, daß der Reflektor beschlägt, sofern nicht ein gewisser Mindestabstand zwischen Wendel und Reflektor eingehalten wird.

Durch den in Infrarot-Gasanalysatoren üblichen Küvettendurchmesser von 1 Zoll (inch) ist der Reflektor-Durchmesser begrenzt; im Interesse guter Strahlbündelung und zur Vermeidung des Beschlagens des Reflektors muß die konventionelle Strahungsquelle klein gehalten werden. Damit ist die zur Verfügung stehende strahlende Oberfläche beschränkt. Eine größere Strahlungsleistung kann nur durch höhere Strahlertemperaturen erreicht werden. Neben erheblichen Problemen der Materialauswahl ist damit eine Verschiebung des Maximums des emittierten Lichtes in den visuellen Bereich verbunden. Der Wirkungsgrad als IR-Strahler ist damit verhältnismäßig gering.

Die Erfindung stellt sich die Aufgabe, eine Strahlungsanordnung mit flächenhaft ausgebildeter Strahlungsquelle hoher Strahlungsleistung, insbesondere für Infrarot-Strahlung anzugeben, bei der ein Bündel gerichtet austretender Strahlen mit begrenztem Durchmesser abgestrahlt wird. Weiterhin soll ein Beschlagen des Reflektors sowie eine zu starke Aufheizung des Gesamtgerätes vermieden werden; insbesondere soll eine möglichst große Strahleroberfläche und innerhalb eines vorgegebenen Spektralbereichs - beispielsweise im Infrarotbereich - eine hohe Intensitätsdichte der abgegebenen Strahlung erzielt werden.

Darüber hinaus soll im Falle von Infrarot-Strahlung der Strahler im Temperaturbereich zwischen 300 und 700° Celsius betrieben werden können.

Weiterhin soll eine Verwendungsmöglichkeit der Strahlungsanordnung angegeben werden.

Die Aufgabe wird vorrichtungsgemäß durch die Merkmale des Anspruchs 1 gelöst.

In einer vorteilhaften Ausgestaltung der Erfindung ist die elektrisch isolierende Oberfläche als Teil eines formstabilen Trägerkörpers auf Keramikbasis ausgebildet.

In einer bevorzugten Ausführungsform ist die Strahlungsquelle als Widerstandsschicht auf der Innenfläche eines Hohlzylinders im Trägerkörper aufgebracht, wobei die Widerstandsschicht den Reflektorkörper wenigstens teilweise umgibt und die reflektierte Strahlung aus einer der beiden Stirnflächen des Hohlzylinders austritt; die Widerstandsschicht weist eine Dicke von 5 bis 20 µm auf und besteht vorzugsweise aus in gasungsfreiem Binder fein verteiltem Platinmetall oder einer Platinmetallegierung.

Es ist jedoch auch möglichst, Widerstandsschichten aus anderen elektrisch leitfähigen Werkstoffen oder in anderen Strukturen wie z. B. als Platin-Dünnfilm oder aus freitragendem Widerstandsmaterial wie z. B. als Karbonband einzusetzen.

Die flächenhafte Strahlungsquelle kann in einer vorteilhaften Ausführungsform mit einer korrosionshemmenden Schicht aus keramischem Werkstoff oder aus einer Glasur Überzogen sein; in einer weiteren vorteilhaften Ausgestaltung weist der als Strahlenquelle dienende Widerstandskörper zur Emissionsverstärkung eine Glasur oder eine Beschichtung aus zwei oder mehreren Metallen und/oder Metallverbindungen auf, wobei wenigstens eines der beteiligten Metalle der Platinmetallgruppe angehört.

Der den Hohlzylinder bildende Teil des Trägerkörpers besteht vorzugsweise aus Keramik des Typs C230, wobei es je nach thermischer Beanspruchung möglich ist, die Außenfläche des Trägerkörpers mit Kühlkörpern zu versehen.

Weitere bevorzugte Ausgestaltungen der Strahlungsanordnung sind in den Ansprüchen 2 bis 32 angegeben.

Als vorteilhaft erweist es sich, daß mittels Flächenstrahler eine verhältnismäßig große Strahlungsenergie mit niedriger Energiestromstärke ausgesendet werden kann, welche dann mittels reflektierender Anordnung in ein Strahlenbündel hoher Energiestromdichte umgewandelt werden kann. Ein weiterer Vorteil ist darin zu sehen, daß der Strahlerkörper durch seine Abstützung auf elektrisch isolierenden Oberflächen des Gehäuses, bzw. auf dem Trägerkörper eine wesentlich höhere Stabilität aufweist als eine beispielsweise frei im Raum hängende Glühwendel.

Weiterhin erweist es sich als vorteilhaft, daß als Strahlenquelle ein selbsttragender Körper eingesetzt werden kann, welcher bei bandförmigem Widerstandsmaterial in zwei sich gegenüberliegende Richtungen Energie abstrahlt, welche über ein Spiegel bzw. Umlenkspiegelsystem in ein Strahlenbündel umgewandelt werden kann. Hierbei erweisen sich die hohe Strahlungsausbeute und die geringe Wärmeträgheit als vorteilhaft.

Ein weiterer Vorteil ist durch die Möglichkeit der Vergrößerung des Durchmessers von Träger und Strahlerkörper zu sehen, wobei auch der Abstand zwischen Strahler und Reflektor so weit zunimmt, daß keinerlei Beeinträchtigung der Reflektorflächen durch emittiertes Material mehr gegeben sind; weiterhin ist es möglich, bei gleichbleibender Schichtdicke durch Vergrößerung des Innendurchmessers des Strahlerkörpers die Strahlungsintensität zu erhöhen, bzw. bei gleichbleibender Strahlungsintensität die Dicke des Strahlerkörpers zu reduzieren. Bei Vergrößerung des Durchmessers wird ein größerer Teil der Streustrahlung vorteilhafterweise nicht mehr reflektiert und somit die Bündelqualität des Strahlers verbessert. Weiterhin ist bei Vergrößerung des Durchmessers des Strahlerkörpers unter gleichbleibender Leistungsaufnahme eine verbesserte Wärmeabgabe über die Kühlvorrichtung des Trägerkörpers möglich.

Die Aufgabe wird verwendungsgemäß durch die Ansprüche 33 und 34 gelöst.

Vorteilhafterweise läßt sich gemäß Anspruch 33 die statisch betriebene Strahlungsanordnung in Gas-Analyse-Vorrichtung mit rotierender Kalibrationsblende einsetzen, wie sie beispielsweise aus der US-PS 3,562,522 bekannt ist; weiterhin ist es gemäß Anspruch 34 vorteilhafterweise möglich, durch direkte Modulation der Strahlungsintensität eine solche Gas-Analyse-Vorrichtung ohne rotierende Kalibrationsblende zu betreiben, woraus sich eine Vereinfachung ergibt.

Im folgenden ist der Gegenstand der Erfindung anhand der Figuren 1a, 1b, und 2 bis 14 näher erläutert.

Figur 1a zeigt eine axialsymmetrische Strahlungsanordnung im Längsschnitt, während

Figur 1b die gleiche Strahlungsanordnung im Querschnitt entlang der Linie AB zeigt.

Figur 2 zeigt im Längsschnitt eine Anordnung mit vergrößertem Innendurchmesser, zusätzlichem Lichtaustrittsfenstern für Streulicht, während

Figur 3 eine ähnliche Strahlungsanordnung wie Figur 1a zeigt, wobei auf besondere Kühlkörper verzichtet wurde.

Figur 4 zeigt einen Ringstrahler mit auf einer Keramik aufgebrachten Widerstandsschicht aus Platin, der sich insbesondere als Strahlungsquelle für Infrarot-Gasanalysatoren eignet.

Die Figuren 5a, 5b, 5c und 5d zeigen verschiedene prinzipielle Strukturen des in Figur 4 angebrachten Widerstandskörpers, wobei auch freitragende Widerstandskörper - ähnlich wie nachfolgend in Figur 6 dargestellt - in dieser Weise strukturiert sein können.

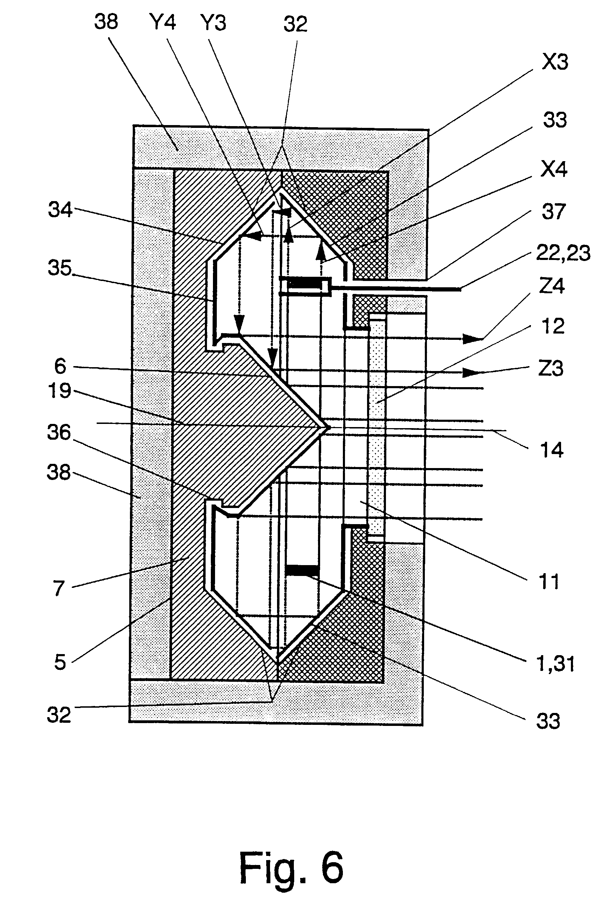

Anhand Figur 6 ist eine Strahlungsanordnung mit einem Strahlerkörper erläutert, der in Form eines Widerstandsbandes als selbsttragender Körper aufgebaut ist, die sich insbesondere als modulierte Strahlungsquelle für Infrarot-Gasanalysatoren eignet, oder auch mit höheren Temperaturen (um 1000°C) betrieben werden kann.

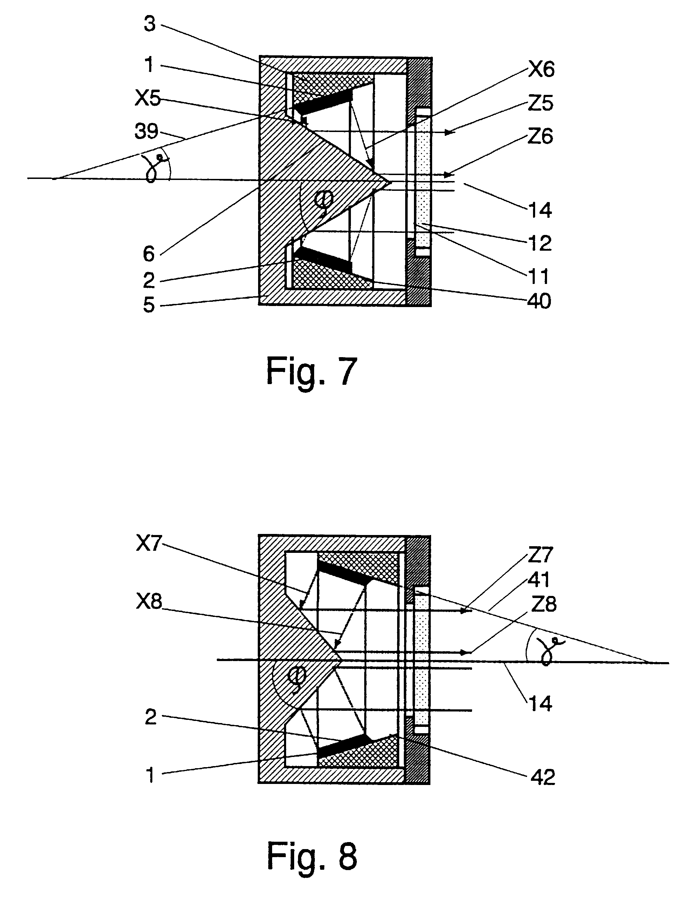

Figur 7 zeigt eine Strahlungsanordnung mit einem Strahlerkörper, der in Form einer sich in Richtung Austrittsöffnung konisch erweiternden Widerstandsschicht aufgebracht ist.

Figur 8 zeigt eine Strahlungsanordnung, in der die als Strahlerkörper dienende Widerstandsschicht sich in Richtung der Strahlenaustrittsöffnung konisch verjüngt.

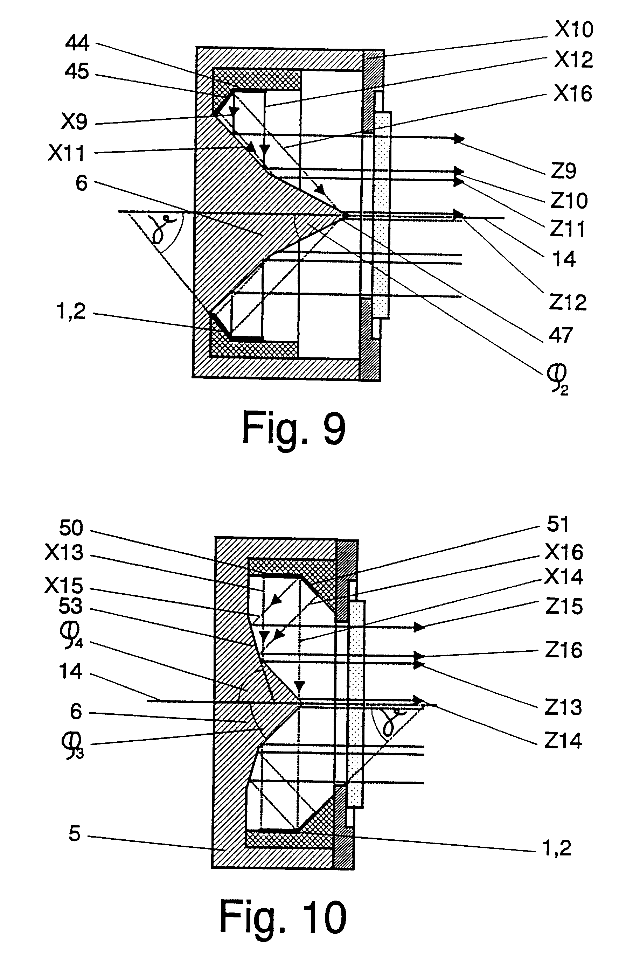

Figur 9 zeigt die Kombination einer Widerstandsschicht aus einem zylindrischen Ringkörper und einen sich in Strahlenaustrittsöffnung entlang der optischen Achse erweiternden Kegelstumpf.

Figur 10 zeigt eine Strahlungsanordnung mit einem Strahlerkörper, bei dem die Widerstandsschicht in Form eines zylindrischen Ringkörpers und eines sich in Strahlenaustrittsrichtung konisch verengenden Kegelstumpfes gebildet ist.

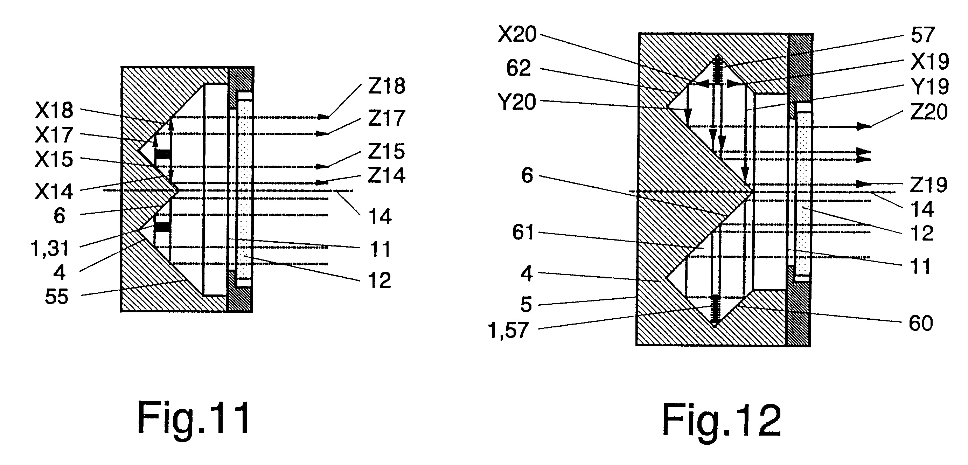

Figur 11 zeigt einen selbsttragenden Strahlerkörper ähnlich wie er anhand Figur 6 erläutert ist, wobei jedoch das Reflektorelement eine abgewandelte Form aufweist.

Figur 12 zeigt eine Strahlungsanordnung, in der der Strahlerkörper in Form einer Kreisringfläche ausgebildet ist.

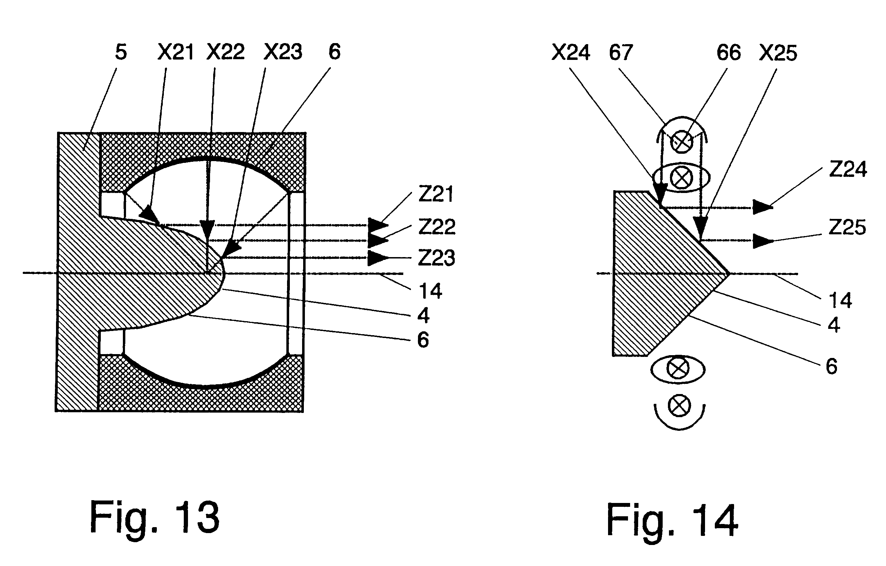

Figur 13 zeigt eine Strahlungsanordnung, bei der die flächenhafte Strahlungsquelle als Innenfläche eines ringförmigen Hohlkugelabschnitts ausgebildet ist.

Figur 14 zeigt in einer schematischen Darstellung eines nicht beanspruchten Vergleichsbeispiels eine Strahlungsquelle, die aus einer Vielzahl punktförmiger Einzelstrahler gebildet ist.

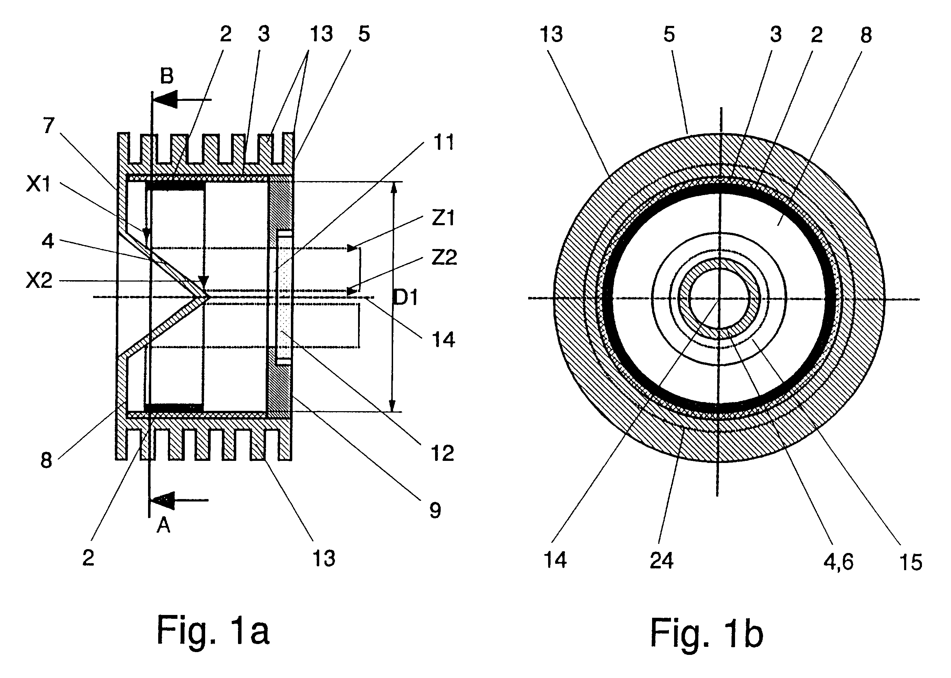

Gemäß Figur 1a ist der Strahlerkörper 1 als elektrisch leitende Widerstandsschicht 2 auf der Innenseite eines hohlzylindrisch ausgebildeten aus elektrisch isolierendem Werkstoff bestehenden Trägerkörpers 3 aufgebracht, welcher ein als Reflektor 4 dienendes kegelförmiges Reflektorelement 6 umfaßt; die Achse dieser axialsymmetrischen Anordnung ist mit Bezugsziffer 14 bezeichnet. Das Reflektorelement 6 bildet einen Teil des Gehäuses 5, welches mittels seiner ringförmig ausgebildeten Struktur den Trägerkörper 3 umfaßt und mit diesem fest verbunden ist. Das Reflektorelement 6 ist an einer ersten Stirnfläche 7 der ringförmigen Struktur des Gehäuses mittels erster Stirnwand 8 befestigt, während die zweite Stirnfläche 9 der ringförmigen Struktur durch eine Lichtaustrittsöffnung 11 abgeschlossen ist. Dabei ist es möglich, Öffnung 11 durch ein für Infrarotlicht transparentes Element 12 bzw. Fenster abzudecken, welches beispielsweise als optisches Filter ausgeführt sein kann; gegebenenfalls ist es auch möglich, das Gehäuse 5 mittels Element 12 gasdicht abzuschließen und das Gehäuse mit einer Gasfüllung bzw. Inertgasfüllung, z.B. Argon oder Stickstoff zu versehen.

Der Außenumfang der ringförmigen Struktur des Gehäuses 5 ist mit sich in radialer Richtung erstreckenden Kühlrippen 13 als Kühlvorrichtung versehen, welche insbesondere bei Impulsbetrieb des Strahlerkörpers für eine rasche Abführung der Wärme sorgen, so daß beispielsweise eine Impulsfolge von Hell- und Dunkelphasen in ihren Helligkeitswechseln gut erkennbar ist.

In Figur 1b ist anhand des in Pfeilrichtung betrachteten Querschnittes AB der Figur 1a das Gehäuse 5 mit seiner ringförmigen Struktur sowie dem geschnitten dargestellten Reflektorelement 6 und der zugehörigen ersten Stirnwand 8 der Stirnfläche 7 erkennbar; die Innenseite der ringförmigen Struktur umfaßt den Trägerkörper 3 mit der darauf aufgebrachten Widerstandsschicht 2 als Strahlerkörper; der Innendurchmesser der Widerstandsschicht 2 ist mit D1 bzeichnet. Die ringförmige Struktur des Gehäuses 5 ist im Querschnitt von der geschnitten dargestellten scheibenförmigen Kühlrippe 13 umgeben, wobei Kühlrippe 13 und ringförmige Struktur aus dem gleichen Werkstoff bestehen, zwecks besserer Übersicht sind jedoch die Grenzen durch gestrichelte Linien 24 dargestellt. Die zugehörige optische Achse des Strahlenganges ist mit Ziffer 14 bezeichnet.

Als Werkstoff für den Trägerkörper 3 ist Keramik des Typs C230 vorgesehen, wobei das Gehäuse 5 ebenfalls aus Keramik besteht. Als Werkstoff für die Widerstandsschicht 2 dient Platinmetall, insbesondere Platin mit Haftvermittler, welches im Dickschichtverfahren aufgebracht ist; die Dicke dieser Schicht liegt im Bereich von 5 bis 20 µm.

Weiterhin hat sich eine durch Kathodenzerstäubung aufgebrachte Platindünnschicht mit einer Dicke von 0,08 bis 1,2 µm als geeignet erwiesen; es ist jedoch auch möglich, eine Widerstandsschicht aus Molybdänsilicit vorzusehen, wie dies aus der DE-OS 38 43 863, der US-PS 4,908,497 bzw. der US-PS 4,267,435 bekannt ist; die Kontaktierung kann dabei über Anschlußelemente erfolgen, wie sie beispielsweise in der US-PS 4,720,697 angegeben sind.

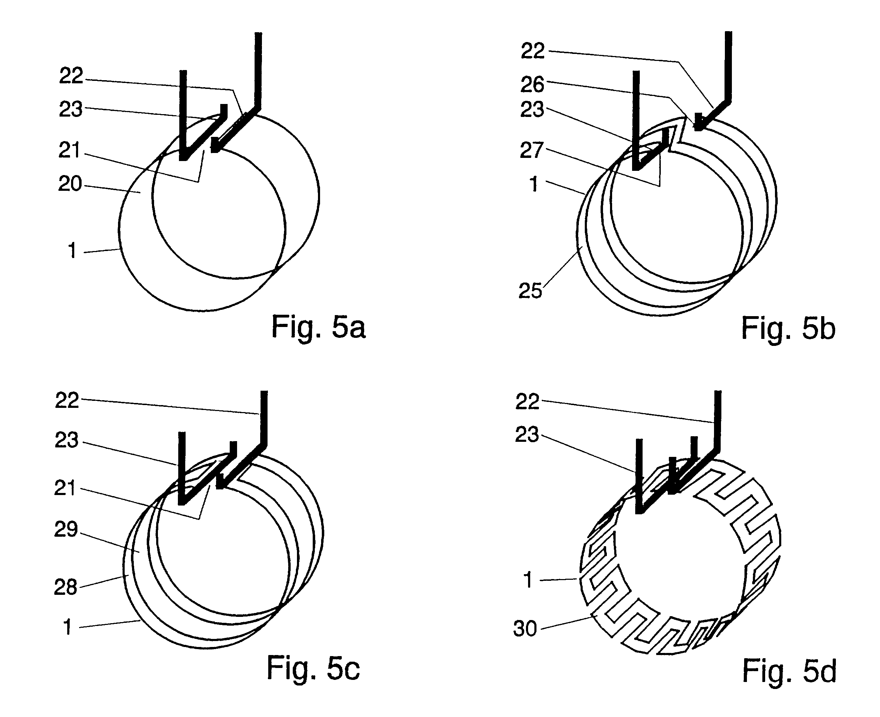

Zur Erzielung einer möglichst gleichmäßigen Abstrahlung hat sich insbesondere eine Mäanderform gemäß der nachfolgend erläuterten Figur 5d der Widerstandsschicht für den Strahlerkörper erwiesen, wobei gleichmäßig aus allen Richtungen auf das Reflektorelement gestrahlt wird; es ist jedoch auch möglich, andere Formen vorzusehen, wie beispielsweise eine spiralförmige Anordnung bzw. eine zickzackförmige Anordnung der Widerstandsbahnen des Strahlerkörpers 1.

Die Erläuterung der Funktionsweise erfolgt anhand der Figuren 1a und 1b.

Gemäß Figur 1a tritt die von der Widerstandsschicht 2 als Strahlerkörper 1 erzeugte Infrarot-Strahlung in radialer Richtung zur optischen Achse 14 hin aus und trifft dabei mit ihren symbolisch dargestellten Strahlen X1 und X2 auf das kegelförmige Reflektorelement 6, an dessen Mantel es in Richtung der Achse 14 als Strahlenbündel mit den symbolisch dargestellten Strahlen Z1 und Z2 reflektiert wird und über Öffnung 11 und transparentes Element 12 als Bündel paralleler Strahlen das Gehäuse 5 in der symbolisch mittels Pfeil 43 dargestellten Richtung verläßt. Die als Mantelfäche des Strahlenbündels bezeichnete Strahlung Z1 ist als konzentrischer Kreis 15 der äußeren Mantelfläche des von reflektierten Strahlen Z1 gebildeten Lichtbündels dargestellt.

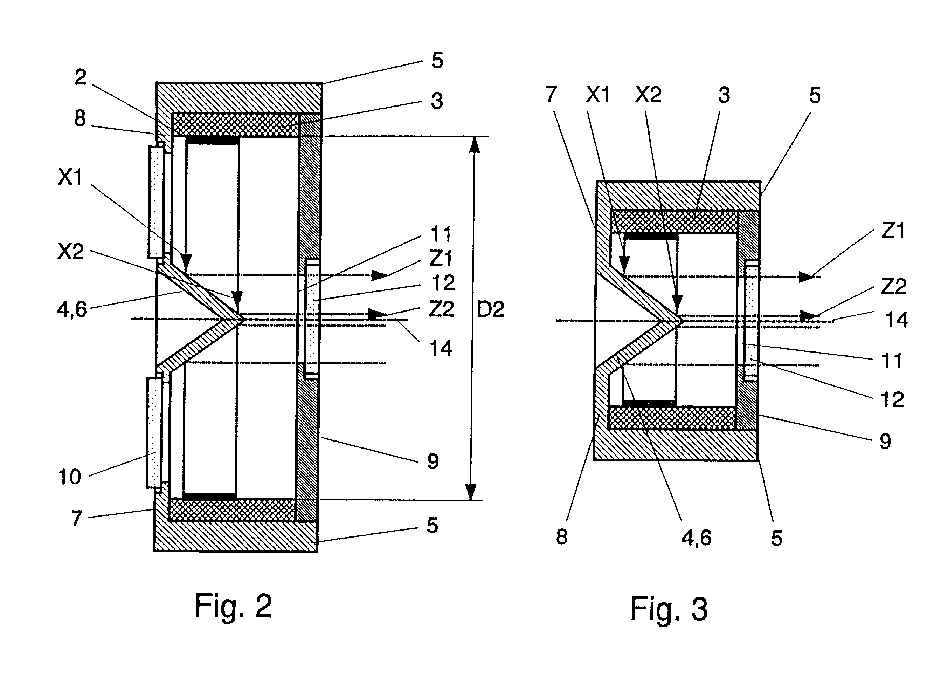

Figur 2 zeigt eine ebenfalls zylindersymetrische Strahlungsanordnung, wobei gegenüber der Figur 1a der Innendurchmesser D2 des hohlzylindrischen Trägerkörpers 3 erheblich vergrößert ist. Dies bedeutet, daß bei gleichbleibender Strahlungsdichte eine erhöhte Strahlungsleistung auf das Reflektorelement 6 abgegeben wird, woraus sich eine erhöhte Strahlungsintensität der das Gehäuse 5 entlang Achse 14 verlassenden Strahlung ergibt. Aufgrund des erhöhten Abstandes zwischen Reflektor 4 und Strahlerkörper 1 ist es hierbei auch möglich, die Strahlungsdichte zu erhöhen, ohne daß es zum Beschlagen der Fläche des Reflektors aufgrund emittierter Teilchen der Widerstandsschicht 2 des Strahlerkörpers kommt. Es ist selbstverständlich auch möglich, die Gehäuseanordnung mit vergrößertem Innendurchmesser mit Kühlrippen, gegebenenfalls aus Aluminium gemäß Figur 1a zu versehen, sofern eine erhöhte Leistungsabgabe oder ein Impulsbetrieb eine rasche Wärmeabführung aus der als Strahlerkörper dienenden Widerstandsschicht erfordert. Ein wesentlicher Vorteil des vergrößerten Innendurchmessers ist darin zu sehen, daß aufgrund der vergrößerten Abstrahlfläche des Strahlerkörpers eine erhöhte Abgabe von Strahlungsintensität ohne Veränderung des Spektrums möglich ist, während ein großer Teil der Streustrahlung über die in der ersten Stirnfläche 7 eingebrachten Austrittsfenster 10 nach hinten abgestrahlt wird und somit nicht das aus der zweiten Stirnfläche 9 und Öffnung 11 frontal austretende Lichtbündel überlagert.

Die in Figur 3 dargestellte Anordnung entspricht im Prinzip der Ausführungsform gemäß Figur 1a, wobei auf den Einsatz von Kühlkörpern verzichtet wird; Strahlungsanordnungen solcher Art sind insbesondere für eine niedrigere Strahlungsintensitätsabgabe im Dauerbetrieb geeignet.

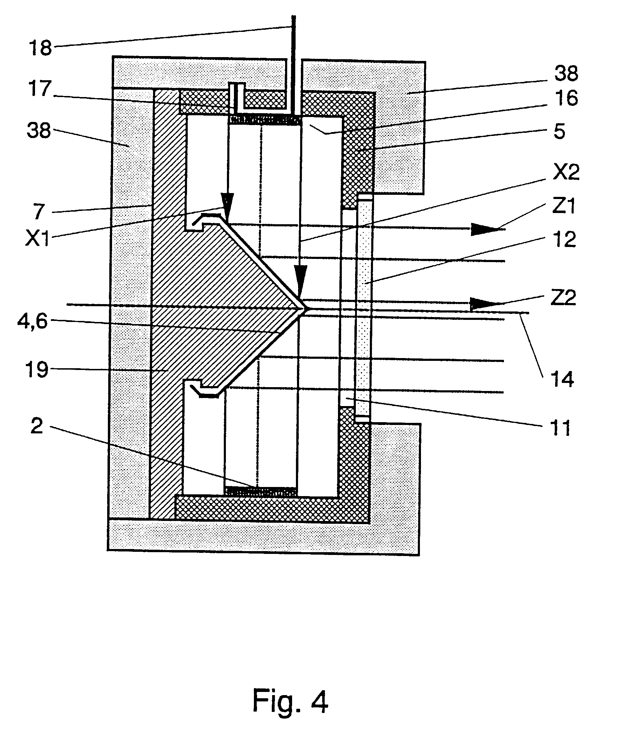

Figur 4 zeigt eine als Ringstrahler ausgebildete Strahlungsanordnung, welche sich insbesondere als Strahlungsquelle für Gasanalysatoren eignet.

Die als Strahlerkörper 1 dienende Widerstandsschicht 2 besteht aus einer Platinmetallschicht in einer Dicke von 5 bis 20 µm, welche mit einem Haftvermittler, insbesondere mittels Glasfritte im Dickschichtverfahren auf den inneren Hohlzylinder des Trägerkörpers 3, welcher aus einer Keramik des Typs C230 besteht, aufgebracht ist. Die als ringförmige Struktur aufgebrachte Widerstandsschicht 2 weist eine Breite von ca. 8 mm auf, während der Innendurchmesser des Trägerkörpers 3 ca. 30 - 40 mm beträgt. Das Reflektorelement 6 des Reflektors 4 besteht aus einem geprägten Aluminiumhütchen, das auf einem Reflektorträger 19 aufgebracht ist. Die ringförmige Struktur der Widerstandsschicht 2 weist einen anhand der Figur 5a erläuterten Spalt parallel zur optischen Achse 14 auf, wobei zur Stromversorgung im Spaltbereich 16 befindliche Kontakte 17 vorgesehen sind, die aus einem U-förmig gebogenen Platindraht 18 bestehen.

Außer der im Dickschichtverfahren aufgebrachte Widerstandsschicht 2 ist es auch möglich eine im Dünnschichtverfahren durch Kathodenzerstäubung aufgebrachte Platinschicht als Widerstandsschicht 2 einzusetzen, wobei deren geometrische Ausmaße und Stromversorgungsanschlüsse denen der vorstehenden erläuterten Dickschicht entsprechen.

Die Lichtaustrittsöffnung 11 ist - wie bereits anhand Figur 1a erläutert - mittels eines Fensters oder transparenten Elements 12 verschlossen, das im wesentlichen aus Calciumfluorid, Saphir oder anderen infrarotstrahlungsdurchlässigen Stoffen besteht. Die Strahlen des austretenden Lichtbündels werden im wesentlichen parallel zur optischen Achse 14 geführt.

Das Gehäuse 5 kann mit Ausnahme der Lichtaustrittsöffnung 11 von einer thermisch isolierenden Umhüllung 38 umgeben sein, um rasche Schwankungen der Umgebungstemperatur gegenüber dem Gehäuse weitgehend abzuschirmen; als Werkstoff für thermische Isolation kann ein Keramik-Foamblock dienen.

Anhand der Figuren 5a, 5b, 5c und 5d ist die prinzipielle Struktur des Strahlerskörpers 1 erkennbar.

Die Struktur kann dabei sowohl in Form einer Widerstandsschicht aufgetragen sein, als auch in Form eines flächenhaft gewickelten Widerstandsdrahtes als selbsttragender Körper oder eines Widerstandsbandes als selbsttragender Körper ausgeführt sein.

Die in Figur 5a dargestellte Struktur stellt einen Strahlerkörper 1 als flächenhaften Ringmantel 20 dar, welcher durch einen Spalt 21 aufgetrennt ist, wobei die dem Spalt benachbarten Enden über Kontaktelemente 22, 23 mit der Stromversorgung verbunden sind. Die Kontaktelemente 22, 23 können beispielsweise U-förmig ausgebildet sein, es ist jedoch auch möglich abgewinkelte Anschlußdrähte als Kontaktelemente 22, 23 einzusetzen.

Gemäß Figur 5b ist es auch möglich, den Strahlerkörper 1 in Form einer flächenhaften ringmantelförmigen Spirale 25 vorzusehen, deren jeweilige Enden 26, 27 jeweils mit Kontaktelementen 22, 23 verbunden sind. Eine weitere Struktur des Strahlerkörpers 1 ist gemäß Figur 5c durch einen flächenhaften Ringmantel 28 gegeben, dessen Mantelfläche eine Ausnehmung 29 aufweist, so daß im Gegensatz zu der Anordnung gemäß Figur 5a der Ringmantel die Ausnehmung rahmenförmig umgibt. Spalt 21 und Kontaktelemente 22, 23 sind hierbei analog zu der anhand Figur 5a erläuterten Anordnung aufgebaut.

Gemäß Figur 5d weist Strahlerkörper 1 eine flächenhafte Ringmantelstruktur 30 in Mäanderform auf, wobei Spalt 21 und Kontaktelemente 22, 23 wiederum der anhand Figur 5a erläuterten Anordnung entsprechen.

Die anhand der Figuren 5a bis 5d erläuterten Strahlerkörper 1 stehen für bestimmte vorteilhafte geometrische Ausgestaltungen des Strahlerkörpers, wobei die praktische Ausführungsform, der flächenhaften Strahlungsquelle als Widerstandsschicht, als selbsttragendes Widerstandsband, als aufgelegtes Widerstandsband oder in Form eines flächenhaft gewickelten Drahtes ausgebildet sein kann.

Gemäß Figur 6 weist die Strahlungsanordnung einen Strahlerkörper 1 in Form eines Widerstandsbandes 31 als selbsttragender Körper auf, das in seiner Struktur dem aus Figur 5a bekannten Ringmantel 20 entspricht. Das Widerstandsband 31 wird über Kontaktelemente 22, 23 in einem fest vorgegebenen Abstand zur optischen Achse 14 und zum Reflektorelement 6 als Teil des Reflektors 4 gehalten, wobei der Strahlerkörper 1 hier von einem zusätzlichen als optische Einheit wirkenden Reflektorelement 32 umgeben ist; die in radialer Richtung vom Strahlerkörper 1 austretenden Strahlen X3, X4 treffen auf das doppelkonisch ausgebildete zusätzliche Reflektorelement 32, wobei der erste Teilreflektor 33 die auftreffende Strahlung X3, X4 auf einen zweiten Teilreflektor 34 als reflektierte Strahlung Y3, Y4 ablenkt, von wo die reflektierte Strahlung auf Reflektorelement 6 gespiegelt wird und als zusätzliche Strahlung Z3, Z4 entlang der optischen Achse 14 aus Gehäuse 5 austritt.

In einer bevorzugten Ausführungsform ist das aus Keramik des Typs C230 bestehende Gehäuse gasdicht abgeschlossen, wobei der Innenraum mit Argon, Krypton oder Stickstoff bei schwachem Unterdruck gefüllt ist und die Lichtaustrittsöffnung 11 durch Fenster 12 aus Kalziumfluorid, Saphir oder anderen gut infrarotdurchlässigen Substanzen abgedichtet ist.

Wie anhand der Längsschnittsdarstellung gemäß Figur 6 erkennbar ist, bestehen Reflektorelement 6 und der zweite Teilreflektor 34 aus einer zusammenhängenden Reflektoranordnung 35, welche vorzugsweise aus geprägtem Aluminium mit einer Dicke von 0,5 mm hergestellt ist. Zur Arretierung dient eine an der ersten Stirnfläche 7 des Reflektorträgers 19 befindliche Ringnut 36, in die eine ringnutartige Verengung der Reflektoranordnung 35 eingreift und diese zentrisch positioniert. Die beiden Teilreflektoren 33, 34 sind auf ihrer reflektierenden Seite in Form eines Doppel-Konus ausgebildet, wobei der erste Teilreflektor 33 im Bereich der zweiten Stirnfläche 9 so arretiert ist, daß er einen Teil der Gehäusestirnfläche abdeckt, um eine unnötige Erwärmung nichtreflektierender Gehäuseteile zu verhindern. Das in der Längsschnittsdarstellung sichtbare Kontaktelement 23 des Widerstandsbandes 31 ist in einer Bohrung 37 gehalten und positioniert zusammen mit dem hier nicht sichtbaren Kontaktelement 22 den Strahlerkörper in der geometrisch vorgegebenen Form eines Ringmantels. Zum Abgleich bei Gasanalysatoren mit geteilten Küvetten und/oder zur Erhöhung der mechanischen Stabilität des Ringmantels kann ein weiteres Kontaktelement gleichen Aufbaus wie die Kontaktelemente 22 und 23 so angeordnet werden, daß es sich dem Spalt 21 genau gegenüber befindet. Das Gehäuse 5 kann bis auf die Lichtaustrittsöffnung 11 mit einer zusätzlichen thermisch isolierenden Umhüllung 38 versehen sein, die beispielsweise aus Werkstoffen wie Fibrothal[R] oder aus einem Keramikschaumblock bestehen kann. Auf diese Weise sollen Schwankungen der Umgebungstemperatur ohne Auswirkungen auf die Strahleranordnung bleiben.

Aufgrund der geringen Wärmeträgheit des als Strahlerkörper 1 dienenden Widerstandsbandes 31 ist diese Strahlungsanordnung insbesondere zur Abgabe modulierter Lichtimpulse im Bereich von 2 - 10 Hertz geeignet. Selbstverständlich ist es auch möglich, diese Strahlungsanordnung im Dauerstrahlbetrieb zu betreiben.

Die anhand Figur 6 dargestellte Ausführungsform eignet sich insbesondere für Infrarot-Gasanalysatoren.

Gemäß Figur 7 weist die Strahlungsanordnung einen Strahlerkörper 1 in Form einer sich in Richtung Austrittsöffnung 11 konisch erweiternden Widerstandsschicht 2 auf, deren austretende Strahlung schematisch darstellt mit den äußeren Randstrahlen X5 und X6 bezeichnet ist. Die äußeren Randstrahlen X5, X6 treffen dabei auf einen in Richtung Lichtaustrittsöffnung 11 sich spitzwinkelig verjüngendes Reflektorelement 6, an dessen Oberfläche die auftreffenden Strahlen X5 und X6 so reflektiert werden, daß sie als Strahlen Z5, Z6 parallel zur optischen Achse 14 aus dem Gehäuse 5 über Lichtaustrittsöffnung 11 und transparentes Element 12 austreten. Die Widerstandsschicht 2 befindet sich hierbei auf der Innenseite 40 eines hohlkegelartig ausgebildeten Trägerkörpers 3, die ebenso wie Reflektorelement 6 und Widerstandsschicht 2 axialsymmetrisch zur optischen Achse 14 angeordnet ist. Die Verlängerung der kegelstumpfartigen Innenseite 40 bzw. der kegelstumpfartig ausgebildeten Widerstandsschicht in Richtung optischer Achse 14 ergibt einen Kegelmantel 39, dessen Schnittwinkel γ(Gamma) gemäß dem Reflektionsgesetz zu dem vom Reflektorelement 4 mit optischer Achse 14 gebildeten Winkel φ (Phi) folgendes Verhältnis bildet:

$$\varphi = 45° - 0,5 \times \gamma$$

Aufgrund dieser Winkelbeziehung ist eine Parallelität der aus dem Gehäuse 5 austretenden Strahlung zur optischen Achse 14 gewährleistet.

Die übrigen Bauelemente der in Figur 7 beschriebenen Anordnung entsprechen vorstehend erläuterten Anordnungen, so daß sich nähere Erklärungen zu den Werkstoffen und den einzelnen Gehäuseelementen erübrigen.

Figur 8 zeigt eine Strahlungsanordnung, in welcher sowohl die als Strahlerkörper 1 dienende Widerstandsschicht 2 als auch das Reflektorelement 6 so ausgebildet sind, daß sie sich in Strahlenaustrittsrichtung entlang der optischen Achse 14 verjüngen. Die Widerstandsschicht 2 befindet sich hier ebenso wie nach Figur 7 auf der Innenseite 42 eines hohlkegelstumpfartig ausgebildeten Trägerkörpers 3, wobei die Verlängerung des Kegelstumpfes zu einem Kegelmantel 41, wie sie hier durch strichpunktierte Linien dargestellt ist, zu einem Schnittwinkel zwischen optischer Achse 14 und Kegelmantel 41 mit der Bezeichnung γ(Gamma) führt. Die aus der Widerstandsschicht 2 austretenden, symbolisch dargestellten Strahlen X7 und X8 werden an dem stumpfwinkeligen Reflektorelement 6 so reflektiert, daß sie als ebenfalls symbolisch dargestellte Strahlen 27 und 28 austreten, wobei es sich hierbei um ein Strahlenbündel handelt. Die Winkel γ(Gamma) und φ (Phi) stehen aufgrund des Reflektionsgesetzes in folgendem Verhältnis:

$$\varphi = 45° + 0,5 \times \gamma$$

Da der Aufbau der Strahlungsanordnung gemäß Figur 8 im wesentlichen den vorstehend beschriebenen Strahlungsanordnungen entspricht, erübrigen sich weitere Erläuterungen zu den eingesetzten Werkstoffen und den einzelnen Gehäuseelementen.

Weiterhin ist es möglich, eine Kombination der Strahlerkörper und Reflektorelemente nach den Figuren 3, 7 und 8 vorzusehen, wie sie anhand der Figuren 9 und 10 erläutert sind.

Gemäß Figur 9 besteht die Widerstandsschicht 2 aus einem sich in Strahlenaustrittsöffnung entlang optischer Achse 14 sich erweiternden Kegelstumpf 45 und einem zylindrischen Ringkörper 44. Entsprechend den Figuren 3 und 7 treffen die aus dem zylindrischen Ringkörper 44 austretenden symbolisch dargestellten Strahlen X9, X10 auf einen als Teil des Reflektors 4 dienenden Kegelstumpf, dessen verlängert dargestellter Außenmantel mit der optischen Achse einen Schnittwinkel φ1 (Phi 1) bildet, derart, daß die reflektierten Strahlen 29, Z10 parallel zur optischen Achse 14 austreten. Die aus der der kegelstumpfartig ausgebildeten Teil 45 der Widerstandsschicht 2 austretenden Strahlen X11, X12 werden an der als Kegel ausgebildeten Spitze 47 des Reflektors 4 reflektiert und als Strahlen Z11 und Z12 parallel zur optischen Achse 14 aus dem Gehäuse 5 herausgeführt. Der Schnittwinkel des Mantels der Spitze 47 des Reflektorelements 6 mit der optischen Achse 14 ist mit φ 2 (Phi 2) bezeichnet. Die Beziehungen der Winkel beziehungen zwischen dem Winkel φ 2 (Phi 2) und dem aus Figur 7 bekannten Winkel γ(Gamma) des ergänzten Kegelstumpfes ergeben sich für parallel zur optischen Achse 14 austretende Strahlen aus dem Reflektionsgesetz, wie anhand Figur 7 erläutert ist.

Anhand der in Figur 10 dargestellten Ausführungsform ist erkennbar, daß die Widerstandsschicht 2 des Strahlerkörpers 1 hier aus einem zylindrischen Ringkörper 50 und einem in Strahlenaustrittsrichtung entlang der optischen Achse 14 sich verengenden Kegelstumpf 51 gebildet ist, wobei der zylindrische Ringkörper 50 und der Kegelstumpf 51 eine zusammenhängende Widerstandsschicht 2 bilden. Die vom zylindrischen Ringkörper 50 austretende Strahlung mit den symbolisch dargestellten Strahlen X13 und X14 trifft auf die Spitze 52 des Reflektorelements 6 auf, wo sie aufgrund der Auswahl des Schnittwinkels φ3 (Phi 3) des Mantels der Spitze 52 mit der optischen Achse 14 so abgelenkt wird, daß die entsprechend reflektierten Strahlen Z13 und Z14 parallel zur optischen Achse 14 aus dem Gehäuse 5 austreten. Die aus dem Kegelstumpf der Widerstandsschicht 2 austretenden Strahlen X15 und X16 treffen auf den kegelstumpfartigen Teil 53 des Reflektorelements 6, wobei der Schnittwinkel des verlängerten Kegelstumpfmantels mit der optischen Achse einen Winkel φ4 (Phi 4) bildet. Zur Erläuterung der Reflektionsverhältnisse wird in diesem Zusammenhang auf Figur 8 verwiesen, in welcher eine sich nach vorne verjüngende kegelstumpfartige Widerstandsschicht beschrieben ist.

Figur 11 zeigt einen selbsttragenden Strahlerkörper 1 in Form eines Widerstandsbandes 31 auf, ähnlich wie er bereits anhand der Figur 6 erläutert ist, wobei jedoch Reflektorelement 6 eine abgewandelte Form aufweist. Gemäß dieser Figur ist das von dem freitragenden Strahlerkörper 1 umgebene kegelförmige Reflektorelement 6 zusätzlich von einem konzentrisch zur optischen Achse 14 angeordneten Hohlkörper in Form eines Kegelstumpfes 55 umgeben, so daß der Strahlerkörper 1 bzw. Widerstandsband 31 sowohl in radialer Richtung nach außen als auch in radialer Richtung nach innen abstrahlen kann und die austretenden Strahlen jeweils auf ein Teil des Gesamt-Reflektors 4 treffen. So sind die auf das kegelförmige Reflektorelement 6 auftreffenden Strahlen X15, X16 radial nach innen gerichtet und werden gemäß dem Reflektionsgesetz parallel zur optischen Achse 14 als Strahlen Z15, Z16 reflektiert, wobei sie durch Lichtaustrittsöffnung 11 und transparentes Element 12 geführt werden.

Die in radialer Richtung nach außen tretenden Strahlen X17, X18 werden an dem hohlkegelartigen Reflektorelement 55 so reflektiert, daß die abgelenkten Strahlen Z17 und Z18 ebenfalls parallel zur optischen Achse 14 des Gehäuses durch das transparente Element 12 austreten.

Nähere Erläuterungen zum konstruktiven Aufbau vom Strahlerkörper und Werkstoffen sind den Erläuterungen zu Figur 6 zu entnehmen.

Figur 12 zeigt eine Strahlungsanordnung, in der der Strahlerkörper 1 in Form einer Kreisringfläche 57 ausgebildet ist, die als beidseitig strahlende Strahlenquelle ausgeführt ist. Der aus mehreren Teilelementen 60, 61, 62 bestehende Reflektor 4 entspricht in seinem Aufbau im wesentlichen dem anhand Figur 6 erläuterten Reflektor. Nur beispielshaft soll die Funktionsweise anhand schematisch dargestellter Strahlen X19, X20 erläutert werden, wobei der Strahl X19 parallel zur optischen Achse 14 austritt und zunächst auf das Teilelement 60 des Reflektors 4 trifft von wo aus der reflektierte Strahl Y19 nunmehr auf die kegelförmige Spitze 61 des Reflektorelements 6 trifft und von dort als Strahl Z19 entlang der optischen Achse 14 aus dem Gehäuse 5 austritt. Gleichzeitig trifft der entgegen der Strahlenaustrittsrichtung aus der Kreisringfläche 57 abgegebene Strahl X20 auf Teilreflektorelement 62, welches diesen Strahl als reflektierten Strahl Y20 auf die kegelförmige Spitze 61 des Reflektorelements 6 ablenkt, von wo aus er als Strahl Z20 entlang der optischen Achse 14 aus dem Gehäuse 5 austritt.

Bezüglich des konstruktiven Aufbaus und der verwendeten Werkstoffe wird auf die Erläuterungen zu Figur 6 verwiesen.

In einer weiteren axialsymmetrischen Ausgestaltung gemäß Figur 13 ist es darüberhinaus möglich, den Strahlerkörper 1 als einen den Reflektor 4 teilweise umgebenden ringartigen Hohlkugelabschnitt 64 auszugestalten, wobei der Hohlkugelabschnitt im Bereich des Reflektorelements 6 und des Lichtaustritts Öffnungen aufweist. Das in den Hohlkugelabschnitt ragende Reflektorelement 6 ist in einem solchen Fall als Paraboloid ausgebildet, so daß die von der Innenfläche des Hohlkugelabschnitts 64 abgegebenen Strahlen, die hier schematisch mit den Symbolen X21, X22, X23 dargestellt sind, im wesentlichen parallel zur optischen Achse 14 durch das die Öffnung 11 abschließende transparente Element 12 als Strahlen Z21, Z22, Z23 austreten. Bezüglich des konstruktiven Aufbaus und der verwendeten Werkstoffe wird hier ebenfalls auf Figur 6 verwiesen.

Gemäß der in Figur 14 dargestellten axialsymmetrischen Anordnung eines Vergleichsbeispiels, für das Kein Schutz begehrt wird, ist es auch möglich, als Strahlenquelle 1 eine Vielzahl von punktförmigen Strahlenquellen 66 einzusetzen, die nebeneinander liegend angeordnet sind und ringförmig einen Reflektor 4, bzw. Reflektorelement 6 umgeben; die symbolisch dargestellten punktförmigen Strahlenquellen 66 sind jeweils mit einem Strahlerreflektor 67 versehen, welcher ein ebenfalls symbolisch dargestelltes Strahlenbündel X24, X25 auf Reflektorelement 6 lenkt, von wo es in Austrittsrichtung entlang der optischen Achse 14 aus dem hier zwecks besserer Übersicht nicht dargestellten Gehäuse als Strahlen Z24, Z25 austritt.

Bei der beanspruchten Erfindung ist es aber möglich, an Stelle der punktförmigen Einzelstrahler eine flächenhafte, das Reflektorelement ringförmig umgebende Entladungslampe oder einen das Reflektorelement ringförmig umgebenden, flächenhaft gewickelten Widerstandsdraht einzusetzen.

**Patentansprüche**

1. Strahlungsanordnung mit einer Strahlenquelle (1) insbesondere Infrarotstrahler, mit wenigstens einem Reflektor (4), welcher einen wesentlichen Teil der von der Strahlenquelle (1) abgegebenen Strahlung als Strahlenbündel in eine vorgegebene Strahlenaustritts-Richtung entlang einer optischen Achse (14) ablenkt und der wenigstens teilweise durch einen Körper mit reflektierender Oberfläche gebildet ist, dessen Umfang sich in Richtung des Strahlenaustritts verringert, dadurch gekennzeichnet, daß die reflektierende Oberfläche des Reflektors (4) entgegen der hauptsächlichen Strahlenaustrittsrichtung gesehen zum wesentlichen Teil von einer flächenhaft ausgebildeten Strahlenquelle (1) umgeben ist, wobei von der Strahlenquelle (1) in radialer Richtung abgegebene Strahlung zur optischen Achse (14) hin austretend auf wenigstens ein Element der Fläche des Reflektors auftrifft.

2. Strahlungsanordnung nach Anspruch 1, dadurch gekennzeichnet, daß die reflektierende Fläche des Reflektors (4) durch eine axialsymmetrisch ausgestaltete Außenfläche des Körpers gebildet ist.

3. Strahlungsanordnung nach Anspruch 2, dadurch gekennzeichnet, daß der Abstand der Strahlungsquelle (1) von der Achse (14) des reflektierten Strahlenbündels mindestens zum Teil größer ist als der Radius der axialsymmetrisch ausgestalteten Außenfläche.

4. Strahlungsanordnung nach Anspruch 2 oder 3, dadurch gekennzeichnet, daß die reflektierende Fläche des Reflektors (4) als Teil wenigstens eines Kegelmantels ausgebildet ist.

5. Strahlungsanordnung nach Anspruch 2 oder 3, dadurch gekennzeichnet, daß die Oberfläche des Reflektors (4) wenigstens als Teil eines Paraboloiden ausgebildet ist.

6. Strahlungsanordnung nach einem der Ansprüche 1 bis 5, dadurch gekennzeichnet, daß die Oberfläche des Reflektors (4) aus Metall besteht.

7. Strahlungsanordnung nach einem der Ansprüche 1 bis 6, dadurch gekennzeichnet, daß die Oberfläche des Reflektors (4) mit wenigstens einer interferierenden (dielektrischen) Schicht überzogen ist.

8. Strahlungsanordnung nach einem der Ansprüche 1 bis 7, gekennzeichnet dadurch, daß die Oberfläche des Reflektors (4) mit wenigstens einer selektiv absorbierenden Schicht überzogen ist.

9. Strahlungsanordnung nach einem der Ansprüche 1 bis 8, dadurch gekennzeichnet, daß die Oberfläche des Reflektors (4) mit einer korrosionshemmenden Schicht überzogen ist.

10. Strahlungsanordnung nach einem der Ansprüche 1 bis 9, dadurch gekennzeichnet, daß die Strahlung aus einer zusammenhängenden flächenhaften Strahlungsquelle (1) austritt.

11. Strahlungsanordnung nach Anspruch 10, dadurch gekennzeichnet, daß die flächenhafte Strahlungsquelle (1) wenigstens teilweise als Innenfläche eines Zylinders ausgebildet ist.

12. Strahlungsanordnung nach Anspruch 10 oder 11, dadurch gekennzeichnet, daß die zusammenhängende flächenhafte Strahlungsquelle (1) wenigstens teilweise als Innenfläche mindestens eines Kegelstumpfes ausgebildet ist.

13. Strahlungsanordnung nach einem der Ansprüche 10 bis 12, dadurch gekennzeichnet, daß die flächenhafte Strahlungsquelle (1) wenigstens teilweise als Innenfläche eines ringartigen Hohlkugelabschnittes ausgebildet ist.

14. Strahlungsanordnung nach Anspruch 11, dadurch gekennzeichnet, daß als Strahlungsquelle zusätzlich die Außenfläche des Zylinders vorgesehen ist.

15. Strahlungsanordnung nach Anspruch 10, dadurch gekennzeichnet, daß die Strahlenquelle (1) als beidseitig strahlende Kreisringfläche (59) ausgebildet ist.

16. Strahlungsanordnung nach Anspruch 14 oder 15, dadurch gekennzeichnet, daß die Strahlenquelle (1) von wenigstens einem zusätzlichen Reflektor wenigstens teilweise umgeben ist, welcher die von der Strahlenquelle aus gesehen nach außen gerichtete Strahlung auf die von der Strahlungsquelle umgebene reflektierende Fläche lenkt.

17. Strahlungsanordnung nach einem der Ansprüche 1 bis 16, dadurch gekennzeichnet, daß die flächenhafte Strahlungsquelle (1) als elektrisch leitender Widerstandskörper ausgebildet ist.

18. Strahlungsanordnung nach Anspruch 17, dadurch gekennzeichnet, daß die flächenhafte Strahlungsquelle (1) mit einer korrosionshemmenden Schicht überzogen ist.

19. Strahlungsanordnung nach Anspruch 17 oder 18, dadurch gekennzeichnet, daß der Widerstandskörper als Strahlenquelle (1) zur Emissionsverstärkung eine Glasur oder eine Beschichtung aus zwei oder mehreren Metallen und/oder Metallverbindungen aufweist.

20. Strahlungsanordnung nach einem der Ansprüche 17 bis 19, dadurch gekennzeichnet, daß der als Strahlenquelle (1) dienende Hiderstandskörper als elektrisch leitende Schicht (2) auf einem elektrisch isolierenden Substrat als Trägerkörper (3) aufgebracht ist.

21. Strahlungsanordnung nach Anspruch 20, dadurch gekennzeichnet, daß die elektrisch leitende Schicht (2) in Form eines Ringmantels (20) mit einem parallel zur Ringachse verlaufenden isolierenden Spalt (21) als Dickschicht mit einer Dicke im Bereich von 10 bis 20 µm aufgebracht ist, wobei zur Kontaktierung beidseitig des Spalts in die Dickschicht temperaturbeständige Anschlußelemente (22, 23) eingebettet sind.

22. Strahlungsanordnung nach Anspruch 21, dadurch gekennzeichnet, daß die Dickschicht aus einem ausgasungsfreien Binder und einem feinverteilten elektrisch leitendem Material besteht, das in den Binder in einem elektrisch leitenden Verhältnis dispergiert ist, wobei die Anschlußelemente (22, 23) aus Platindraht oder einem Draht einer Platinbasis-Legierung bestehen.

23. Strahlungsanordnung nach einem der Ansprüche 1 bis 16, dadurch gekennzeichnet, daß die Strahlungsquelle (1) aus einem zusammenhängenden, flächenhaft gewickelten Widerstandsdraht besteht.

24. Strahlungsanordnung nach Anspruch 23, dadurch gekennzeichnet, daß der Widerstandsdraht auf einen temperaturbeständigen Träger aufgebracht ist.

25. Strahlungsanordnung nach Anspruch 23, dadurch gekennzeichnet, daß der flächenhaft gewickelte Widerstandsdraht als selbsttragender Körper ausgebildet ist.

26. Strahlungsanordnung nach einem der Ansprüche 1 bis 19, dadurch gekennzeichnet, daß die Strahlungsquelle (1) als Widerstandsband (31) ausgebildet ist, das im Bereich seiner Kanten wenigstens zwei Anschlußelemente (22, 23) besitzt.

27. Strahlungsanordnung nach Anspruch 26, dadurch gekennzeichnet, daß das Widerstandsband (31) wenigstens teilweise auf einem temperaturbeständigen elektrisch isolierenden Trägerkörper (3) aufliegt.

28. Strahlungsanordnung nach Anspruch 26, dadurch gekennzeichnet, daß das Widerstandsband (31) als frei tragender Körper ausgebildet ist, welcher über seine Anschlußelemente (22, 23) gehalten ist.

29. Strahlungsanordnung nach einem der Ansprüche 26 bis 28, dadurch gekennzeichnet, daß als Widerstandsband (31) eine Metallfolie aus Platinmetall oder aus einer Platinmetall-Basislegierung eingesetzt ist.

30. Strahlungsanordnung nach einem der Ansprüche 26 bis 28, dadurch gekennzeichnet, daß als Widerstandsband (31) Karbonband eingesetzt ist.

31. Strahlungsanordnung nach einem der Ansprüche 1 bis 16, dadurch gekennzeichnet, daß die flächenhafte Strahlenquelle (1) wenigstens eine Gasentladungslampe ist.

32. Strahlungsanordnung nach einem der Ansprüche 1 bis 16, dadurch gekennzeichnet, daß die flächenhafte Strahlungsquelle (1) durch eine Mehrzahl kleinflächiger Strahlenquellen gebildet ist, welche jeweils einzeln nebeneinander liegend angeordnet sind.

33. Verwendung einer Strahlungsanordnung nach einem der Ansprüche 1 bis 32 mit einer statisch arbeitenden Strahlungsquelle.

34. Verwendung einer Strahlungsanordnung nach einem der Ansprüche 26 bis 32 mit einer in ihrer Strahlungsintensität modulierbaren Strahlungsquelle.

**Claims**

1. A radiation arrangement with a radiation source (1), in particular an infrared emitter, with at least one reflector (4) which deflects a substantial portion of the radiation emitted by the radiation source (1) as a beam of rays into a given ray outlet direction along an optical axis (14) and which is formed at least partially by a body with a reflecting surface, the circumference of which is reduced in the direction of the ray outlet, characterised in that the reflecting surface of the reflector (4), viewed contrary to the principal ray outlet direction, is surrounded to a substantial portion by a radiation source (1) which is constructed in an areal manner, wherein the radiation emitted in radial direction from the radiation source (1), emerging towards the optical axis (14), strikes onto at least one element of the area of the reflector.

2. A radiation arrangement according to Claim 1, characterised in that the reflecting area of the reflector (4) is formed by an outer face, constructed axially symmetrically, of the body.

3. A radiation arrangement according to Claim 2, characterised in that the distance of the radiation source (1) from the axis (14) of the reflected beam of rays is at least in part greater than the radius of the outer face which is constructed axially symmetrically.

4. A radiation arrangement according to Claim 2 or 3, characterised in that the reflecting area of the reflector (4) is constructed as part of at least one conical shaped shell.

5. A radiation arrangement according to Claim 2 or 3, characterised in that the surface of the reflector (4) is constructed at least as part of a paraboloid.

6. A radiation arrangement according to one of Claims 1 to 5, characterised in that the surface of the reflector (4) consists of metal.

7. A radiation arrangement according to one of Claims 1 to 6, characterised in that the surface of the reflector (4) is coated with at least one interfering (dielectric) layer.

8. A radiation arrangement according to one of Claims 1 to 7, characterised in that the surface of the reflector (4) is coated with at least one selectively absorbing layer.

9. A radiation arrangement according to one of Claims 1 to 8, characterised in that the surface of the reflector (4) is coated with a corrosion-inhibiting layer.

10. A radiation arrangement according to one of Claims 1 to 9, , characterised in that the radiation emerges from a coherent areal radiation source (1).

11. A radiation arrangement according to Claim 10, characterised in that the areal radiation source (1) is constructed at least partially as the inner surface of a cylinder.

12. A radiation arrangement according to Claim 10 or 11, characterised in that the coherent areal radiation source (1) is constructed at least partially as the inner surface of at least one truncated cone.

13. A radiation arrangement according to one of Claims 10 to 12, characterised in that the areal radiation source (1) is constructed at least partially as the inner surface of a ring-like hollow spherical segment.

14. A radiation arrangement according to Claim 11, characterised in that the outer surface of the cylinder is additionally provided as radiation source.

15. A radiation arrangement according to Claim 10, characterised in that the radiation source (1) is constructed ag a circular ring area (59) radiating on both sides.

16. A radiation arrangement according to Claim 14 or 15, characterised in that the radiation source (1) is surrounded at least partially by at least one additional reflector, which guides the outwardly directed radiation, viewed from the direction of the radiation source, onto the reflecting area surrounded by the radiation source.

17. A radiation arrangement according to one of Claims 1 to 16, characterised in that the areal radiation source (1) is constructed as an electrically conducting resistance body.

18. A radiation arrangement according to Claim 17, characterised in that the areal radiation source (1) is coated with a corrosion-inhibiting layer.

19. A radiation arrangement according to Claim 17 or 18, characterised in that the resistance body has as radiation source (1) for emission amplification a glaze or a coating of two or more metals and/or metallic compounds.

20. A radiation arrangement according to one of Claims 17 to 19 characterised in that the resistance body serving as radiation source (1) is applied as an electrically conducting layer (2) on an electrically insulating substrate as carrier body (3).

21. A radiation arrangement according to Claim 20, characterised in that the electrically conducting layer (2) in the form of a ring casing (20) with an insulating gap (21) running parallel to the ring axis is applied as thickness layer with a thickness in the range of 10 to 20 $\mu$m, wherein for contacting, temperature-resistant connecting elements (22, 23) are embedded into the thickness layer on both sides of the gap.

22. A radiation arrangement according to Claim 21, characterised in that the thickness layer consists of a binder free of gassing and of a finely distributed electrically conducting material which is dispersed into the binder in an electrically conducting relationship, wherein the connecting elements (22, 23) consist of platinum wire or of a wire of a platinum-based alloy.

23. A radiation arrangement according to one of Claims 1 to 16 characterised in that the radiation source (1) consists of a coherent areally wound resistance wire.

24. A radiation arrangement according to Claim 23, characterised in that the resistance wire is applied onto a temperature-resistant carrier.

25. A radiation arrangement according to Claim 23, characterised in that the areally wound resistance wire is constructed as a self-supporting body.

26. A radiation arrangement according to one of Claims 1 to 19, characterised in that the radiation source (1) is constructed as a resistance band (31) which has at least two connecting elements (22, 23) in the region of its edges.

27. A radiation arrangement according to Claim 26, characterised in that the resistance band (31) lies at least partially on a temperature-resistant electrically insulating carrier body (3).

28. A radiation arrangement according to Claim 26, characterised in that the resistance band (31) is constructed as a freely bearing body which is held by means of its connecting elements (22, 23).

29. A radiation arrangement according to one of Claims 26 to 28. characterised in that as resistance band (31) a metal foil of platinum metal or of a platinum metal base alloy is used.

30. A radiation arrangement according to one of Claims 26 to 28, characterised in that carbon band is used as resistance band (31).

31. A radiation arrangement according to one of Claims 1 to 16, characterised in that the areal radiation source (1) is at least one gas discharge lamp.

32. A radiation arrangement according to one of Claims 1 to 16, characterised in that the areal radiation source (1) is formed by a plurality of radiation sources having a small area, which are arranged respectively lying individually adjacent to each other.

33. The use of a radiation arrangement according to one of Claims 1 to 32 with a statically operating radiation source.

34. The use of a radiation arrangement according to one of Claims 26 to 32 with a radiation source which is able to be modulated in its radiation intensity.

**Revendications**

1. Système radiant comportant une source de rayons (1), en particulier radiateur à infrarouge, comprenant au moins un réflecteur (4) qui renvoie une partie essentielle du rayonnement émis par la source de rayons (1) sous forme d'un faisceau de rayons dans une direction de sortie des rayons déterminée le long d'un axe optique (14) et qui est formé du moins en partie par un corps à surface réfléchissante dont la périphérie se réduit en direction de sortie des rayons, caractérisé en ce que la surface réfléchissante du réflecteur (4), vue en sens opposé à la direction principale de sortie de rayons, est entourée en majeure partie par une source de rayons (1) réalisée en forme de surface, et le rayonnement émis par la source de rayons (1) en direction radiale sortant vers l'axe optique (14) tombe sur au moins un élément de la surface du réflecteur.

2. Système radiant selon la revendication 1, caractérisé en ce que la surface réfléchissante du réflecteur (4) est formée par une surface extérieure à symétrie axiale du corps.

3. Système radiant selon la revendication 2, caractérisé en ce que la distance entre la source de rayons (1) et l'axe (14) du faisceau de rayons réfléchi est au moins en partie supérieure au rayon de la surface extérieure à symétrie axiale.

4. Système radiant selon l'une ou l'autre des revendications 2 et 3, caractérisé en ce que la surface réfléchissante du réflecteur (4) est réalisée en tant que partie d'au moins une enveloppe conique.

5. Système radiant selon l'une ou l'autre des revendications 2 et 3, caractérisé en ce que la surface du réflecteur (4) est réalisée au moins en tant que partie de paraboloïde.

6. Système radiant selon l'une quelconque des revendications 1 à 5, caractérisé en ce que la surface du réflecteur (4) est constituée en métal.

7. Système radiant selon l'une quelconque des revendications 1 à 6, caractérisé en ce que la surface du réflecteur (4) est revêtue d'au moins une couche interférente (diélectrique).

8. Système radiant selon l'une quelconque des revendications 1 à 7, caractérisé en ce que la surface du réflecteur (4) est revêtue d'au moins une couche à absorption sélective.

9. Système radiant selon l'une quelconque des revendications 1 à 8, caractérisé en ce que la surface du réflecteur (4) est revêtue d'une couche inhibitrice de corrosion.

10. Système radiant selon l'une quelconque des revendications 1 à 9, caractérisé en ce que le rayonnement sort d'une source de rayons (1) en forme de surface continue.

11. Système radiant selon la revendication 10, caractérisé en ce que la source de rayons en forme de surface (1) est réalisée du moins en partie en tant que surface intérieure d'un cylindre.

12. Système radiant selon l'une ou l'autre des revendications 10 et 11, caractérisé en ce que la source de rayons (1) en forme de surface continue est réalisée du moins en partie en tant que surface intérieure d'au moins un tronc de cône.

13. Système radiant selon l'une quelconque des revendications 10 à 12. caractérisé en ce que la source de rayons en forme de surface (1) est réalisée du moins en partie en tant que surface intérieure d'un secteur sphérique creux en forme d'anneau.

14. Système radiant selon la revendication 11, caractérisé en ce qu'il est prévu en supplément en tant que source de rayons la surface extérieure du cylindre.

15. Système radiant selon la revendication 10, caractérisé en ce que la source de rayons (1) est réalisée sous forme de surface annulaire circulaire (59) radiante des deux côtés.

16. Système radiant selon l'une ou l'autre des revendications 14 et 15, caractérisé en ce que la source de rayons (1) est entourée au moins en partie par au moins un réflecteur supplémentaire qui renvoie le rayonnement dirigé vers l'extérieur, vu depuis la source de rayons, sur la surface réfléchissante entourée par la source de rayons.

17. Système radiant selon l'une quelconque des revendications 1 à 16, caractérisé en ce que la source de rayons en forme de surface (1) est réalisée sous forme de corps résistif conducteur de l'électricité.

18. Système radiant selon la revendication 17, caractérisé en ce que la source de rayons en forme de surface (1) est revêtue d'une couche inhibitrice de corrosion.

19. Système radiant selon l'une ou l'autre des revendications 17 ou 18, caractérisé en ce que le corps résistif en tant que source de rayons (1) comporte, pour intensifier l'émission, un émail ou un revêtement en deux ou plusieurs métaux et/ou en alliages de métaux.

20. Système radiant selon l'une quelconque des revendications 17 à 19, caractérisé en ce que le corps résistif servant de source de rayons (1) est déposé en tant que couche (2) conductrice de l'électricité sur un substrat électriquement isolant en tant que corps de support (3).

21. Système radiant selon la revendication 20, caractérisé en ce que la couche (2) conductrice de l'électricité est déposée sous forme d'une enveloppe annulaire (20) avec un intervalle isolant (21) s'étendant parallèlement à l'axe de l'enveloppe, en tant que couche épaisse d'une épaisseur de l'ordre de 10 à 20 μm, des éléments de connexion (22, 23) résistants à la température étant noyés des deux côtés de l'intervalle dans la couche épaisse pour la mise en contact.

22. Système radiant selon la revendication 21, caractérisé en ce que la couche épaisse est constituée d'un liant sans dégazage et d'un matériau finement réparti et conducteur de l'électricité qui est dispersé dans le liant dans un rapport assurant la conduction de l'électricité, les éléments de connexion (22, 23) étant constitués en fil de platine ou en fil d'un alliage à base de platine.

23. Système radiant selon l'une quelconque des revendications 1 à 16, caractérisé en ce que la source de rayons (1) est constituée par un fil résistif d'un seul tenant enroulé de manière à former une surface.

24. Système radiant selon la revendication 23, caractérisé en ce que le fil résistif est déposé sur un support résistant à la température.

25. Système radiant selon la revendication 23, caractérisé en ce que le fil résistif enroulé de manière à former une surface est réalisé sous forme d'un corps auto-porteur.

26. Système radiant selon l'une quelconque des revendications 1 à 19, caractérisé en ce que la source de rayons (1) est réalisée sous forme d'une bande résistive (31) qui possède dans la zone de ses arêtes au moins deux éléments de connexion (22, 23).

27. Système radiant selon la revendication 26, caractérisé en ce que la bande résistive (31) repose au moins en partie sur le corps de support (3) résistant à la température et électriquement isolant.

28. Système radiant selon la revendication 26, caractérisé en ce que la bande résistive (31) est réalisée sous forme d'un corps auto-porteur qui est retenu par l'intermédiaire de ses éléments de connexion (22, 23).

29. Système radiant selon l'une quelconque des revendications 26 à 28, caractérisé en ce qu'il est prévu en tant que bande résistive (31) une feuille en métal du groupe du platine ou en alliage à base de platine.

30. Système radiant selon l'une quelconque des revendications 26 à 28, caractérisé en ce qu'il est prévu en tant que bande résistive (31) une bande de carbone.

31. Système radiant selon l'une quelconque des revendications 1 à 16, caractérisé en ce que la source de rayons en forme de surface (1) est au moins une lampe à décharge gazeuse.

**32.** Système radiant selon l'une quelconque des revendications 1 à 16, caractérisé en ce que la source de rayons en forme de surface (1) est formée par une pluralité de sources de rayons de petite surface qui sont agencées chacune individuellement les unes à côté des autres.

**33.** Application d'un système radiant selon l'une quelconque des revendications 1 à 32 avec une source de rayons à fonctionnement statique.

**34.** Application d'un système radiant selon l'une quelconque des revendications 26 à 32 avec une source de rayons modulable à l'égard de son intensité de rayonnement.

Fig. 1b

Fig. 1a

Fig. 3

Fig. 2

18

38

17

16

38

5

7

X2

X1

Z1

12

Z2

4,6

14

19

11

2

## Fig. 4

Fig. 5b

Fig. 5d

Fig. 5a

Fig. 5c

Fig. 6

Fig. 7

Fig. 8

## Fig. 9

## Fig. 10

Fig.11

Fig.12

EP 0 720 730 B1

Fig. 14

Fig. 13